# FASCICULE DE BREVET EUROPEEN

(11) **EP 0 367 665 B1**
(45) Date de publication et mention de la délivrance du brevet: **31.03.1993**
(21) Numéro de dépôt: 89402983.4
(22) Date de dépôt: 27.10.1989
(51) Int. Cl.: B60R 22/20

(54) **Mécanisme pour ceinture de sécurité à position réglable manuellement**
Handvorrichtung zur Verstellung eines Sicherheitsgurtels
Manual seat belt holder position adjuster

(30) Priorité: 04.11.1988 FR 8814459
(43) Date de publication de la demande: 09.05.1990
(73) Titulaire: ECIA - EQUIPEMENTS ET COMPOSANTS POUR L'INDUSTRIE AUTOMOBILE, F-25400 Audincourt (FR)
(72) Inventeur: Fourrey, François, F-25200 Montbeliard (FR); Deley, Serge, F-25230 Seloncourt (FR); Escaravage, Gérard, F-25700 Valentigney (FR)
(74) Mandataire: Mestre, Jean (FR)

(56) Documents cités:
- EP-A- 0 049 572
- EP-A- 0 180 306
- EP-A- 0 311 509
- DE-A- 3 005 818
- DE-A- 3 151 019
- FR-A- 2 513 887
- US-A- 2 859 710

## Description

La présente invention est relative aux ceintures de sécurité pour véhicule de transport de passagers, notamment terrestre, et a pour objet, plus particulièrement, un mécanisme de maintien pour ceinture de sécurité à position manuellement modifiable du support de sangle, qui est destiné à être associé à une structure résistante.

Comme on le sait, pour des raisons de sécurité, les véhicules de transport de passagers sont, habituellement, pourvus de sièges équipés de ceinture de sécurité. C'est par exemple le cas des aéronefs et des véhicules automobiles.

Pour les véhicules automobiles terrestres, on utilise, habituellement, des ceintures de sécurité à deux ou trois points d'ancrage. Lorsqu'on utilise une ceinture de sécurité à trois points d'ancrage, la sangle comprend un brin ventral et un brin pectoral qui traverse le torse du porteur à la manière d'une courroie de baudrier.

Lorsqu'on se sert d'une ceinture de sécurité de ce dernier type, le brin pectoral occupe une position par rapport à son porteur, qui est fonction, à la fois, de la morphologie de celui-ci, de la géométrie du véhicule et du siège et, aussi de l'état de fatigue de ce dernier. Dans ces conditions le brin pectoral peut se trouver, dans certains cas, au niveau du cou porteur. On comprend donc que lors d'une collision violente, la ceinture de sécurité étant immobilisée sous la commande d'un détecteur d'inertie, le corps du passager se trouve violemment projeté en avant et son cou rencontre la sangle qui peut alors se comporter non plus comme un moyen de sécurité mais comme un objet particulièrement dangereux. En effet, on a pu constater, dans certains cas de collision, des lésions graves du cou provoquées par la ceinture de sécurité et, plus particulièrement, son brin pectoral.

C'est pourquoi on a déjà proposé de faire en sorte que le point d'amarrage supérieur du brin pectoral soit de position réglable pour tenir compte de la morphologie du porteur comparée à la configuration du véhicule.

Différents dispositifs ont déjà été proposés. Très souvent ils sont tels que le point d'amarrage supérieur du brin pectoral peut occuper des positions multiples situées à l'intérieur d'un domaine dont l'amplitude tient compte des morphologies extrêmes d'une population comparée à sa moyenne.

Ces dispositifs, qui sont parfois motorisés, sont d'une très grande complexité. Ils font très souvent appel à des mécanismes du type à vis et écrou qui permettent donc de faire varier progressivement la position du point d'amarrage supérieur du brin pectoral.

D'autres modes de réalisation font appel à des cliquets et à des trous par rapport auxquels se déplacent des mécanismes à chariot mobile.

D'autres modes de réalisation mettent en oeuvre des mécanismes à verrou équipé d'un pêne et d'une gâche.

A ce dernier type de solution correspond, par exemple, la réalisation qui fait l'objet du document FR-A- 2 261 023. Ce document décrit un mécanisme de maintien pour ceinture de sécurité à position manuellement modifiable du support de sangle. Ce mécanisme qui est destiné à être associé à une structure résistante par exemple une coque de véhicule, est constitué, entre autres, d'un corps transpercé d'une fente dont l'un des flancs est pourvu de découpes, d'un tourillon qui est fait d'un talon, d'une tige avec deux portées cylindriques successives de diamètres différents et d'un embout pour recevoir des moyens de retenue. Ce tourillon est destiné à être engagé dans la fente du corps et à recevoir un support de sangle. Ce mécanisme comprend aussi un organe de sollicitation élastique agissant sur le tourillon. Dans cette solution lorsqu'on exerce une poussée axiale ou latérale sur le tourillon à l'encontre de la sollicitation élastique, on peut le faire passer d'une des découpes à une autre de la fente pratiquée dans le corps et ainsi modifier la position du point d'ancrage de la ceinture de sécurité. Ce dispositif ne donne pas entière satisfaction car il est sujet à la défaillance de l'organe de sollicitation élastique et il est d'une manipulation quelque peu malcommode.

Quelles que soient les solutions que l'on vient d'évoquer, elles sont toutes d'une configuration relativement compliquée et de ce fait peu fiables, d'un coût relativement élevé et d'une mise en oeuvre relativement complexe.

L'invention se propose de réaliser un mécanisme de maintien pour ceinture de sécurité à position manuellement modifiable du support de sangle qui est destiné à être associé à une structure résistante et qui ne présente pas ce type d'inconvénients, qui soit relativement simple et d'un coût de fabrication et de mise en place modique et, aussi, d'une mise en oeuvre commode.

L'invention a pour objet un mécanisme de maintien pour ceinture de sécurité à position manuellement modifiable du support de sangle, du type indiqué dans le document précédent dont les éléments qu'il divulgue et qui sont nécessaires à l'invention sont mentionnés dans le préambule de la revendication principale. Les particularités distinctives de l'invention figurent notamment dans la partie caractérisante de cette revendication.

D'autres caractéristiques de l'invention apparaîtront à la lecture de la description et des revendications qui suivent et à l'examen du dessin annexé, donné seulement à titre d'exemple où :
- la Fig.1 est une vue perspective éclatée d'un mode de réalisation d'un mécanisme selon l'invention ;
- la Fig.2 est une coupe longitudinale par un plan passant par l'axe du tourillon et parallèle à la direction de la fente ;
- les Fig.3A à 3E sont des schémas illustrant la mise en oeuvre du mécanisme selon l'invention selon un sens ;
- les Fig.4A à 4E sont des schémas illustrant la mise en oeuvre du mécanisme suivant l'invention selon le sens opposé ;
- les Fig.5A à 5D sont d'autres schémas illustrant ce qui se passe en cas de défaillance du mécanisme selon l'invention ;
- la Fig.6 est une vue analogue à celle de la Fig.1 d'un autre mode de réalisation de l'invention ;
- la Fig.7 est une coupe longitudinale du mode de réalisation de la Fig.6, analogue à celle de la Fig.2 ;
- la Fig.8 est une coupe par un plan perpendiculaire à l'axe du tourillon et passant par le fond des gorges du levier du mécanisme ;
- la Fig.9 est une vue de face du mécanisme assemblé ; et
- la Fig.10 est une vue partielle de détail.

Les mécanismes de maintien pour ceinture de sécurité à position manuellement modifiable du support de sangle étant bien connus dans la technique, on ne décrira par la suite que ce qui a trait directement ou indirectement à l'invention. Pour le surplus, le spécialiste de la technique considérée puisera dans les solutions courantes classiques à sa disposition pour satisfaire aux impératifs particuliers auxquels il est confronté.

Dans ce qui suit on utilisera toujours un même numéro de référence pour désigner un même élément quel que soit le mode de réalisation.

Pour la clarté de l'exposé on décrira successivement chacun des constituants d'un mécanisme selon l'invention.

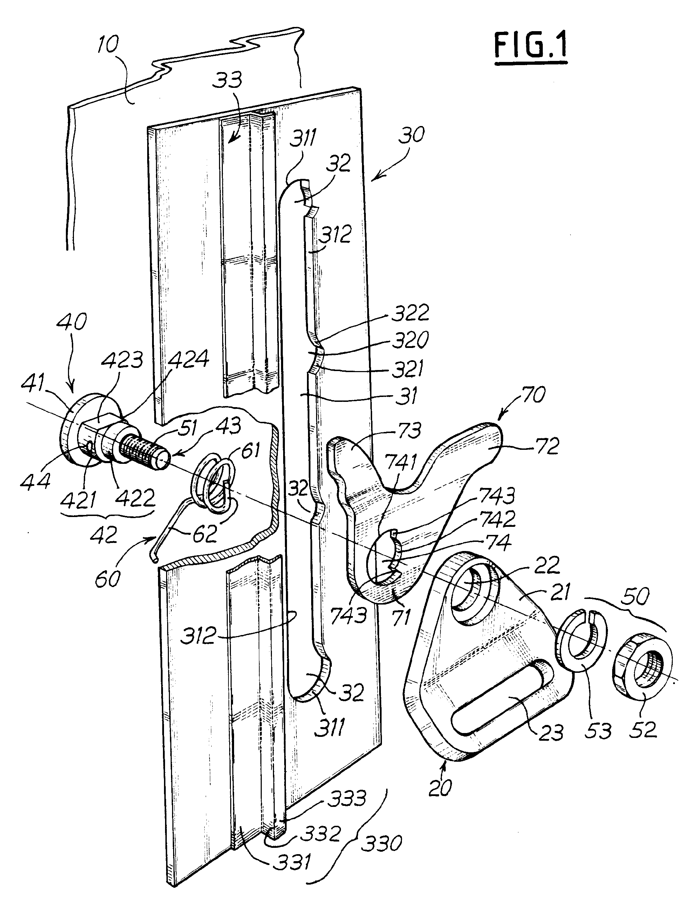

Comme on le voit en particulier sur la Fig.1 le mécanisme selon l'invention est destiné à être associé à une structure résistante telle que, par exemple, la coque 10 d'un véhicule et, plus particulièrement, par exemple au montant médian qui sépare habituellement les portes latérales antérieure et postérieure d'un même côté. Cette coque 10 est seulement représentée schématiquement.

Le mécanisme selon l'invention est destiné à porter un support de sangle 20 de tout type classique. Ce support de sangle est, par exemple, un renvoi qui permet de faire changer la direction d'une sangle, non représentée, de ceinture de sécurité pour diriger le brin pectoral vers un enrouleur non dessiné. Ce support de sangle 20, seulement schématisé sur le dessin, comprend essentiellement un bâti 21 dans lequel est pratiqué un orifice 22 par exemple lamé comme illustré, et un passage de sangle 23.

Le mécanisme selon l'invention comprend essentiellement pour ce mode de réalisation un corps 30, un tourillon 40 avec des moyens de retenue 50, un organe de sollicitation élastique 60 et un levier de manoeuvre 70.

Comme on le voit particulièrement bien en se reportant à la Fig.1, le corps 30 est percé d'une fente 31 délimitée par des extrémités 311 opposées et des flancs 312 en regard. Sur l'un des flancs 312 sont pratiquées des découpes 32 par exemple régulièrement réparties et équidistantes. Il est clair que ces découpes peuvent se limiter à deux, une au voisinage de chacune des extrémités 311 de la fente.

Comme on peut l'observer, les découpes 32 ont une configuration en triangle curviligne 320 qui comprend un arc concave 321 et un arc convexe 322 en direction de la fente 31. En position normale de fonctionnement du mécanisme, l'arc concave 321 est situé au-dessous de l'arc convexe 322. On forme ainsi des redans.

Au corps 30 est aussi associé, à proximité de la fente 31, un appui 33. Pour ce mode de réalisation cet appui se présente par exemple à la manière d'une réglette 330 avec une semelle 331, un fond 332 et un rebord 333 ; cette réglette est orientée parallèlement à la fente 31, comme illustré.

Selon la manière dont le corps est fabriqué cet appui en forme de réglette peut être obtenu d'un seul tenant ou bien être rapporté sur le corps et fixé sur celui-ci par toute technique connue par exemple soudage, boulonnage, rivetage, collage,... .

Comme on peut l'observer en examinant la Fig.1, le tourillon 40 se compose d'un talon 41 qui se prolonge par une tige 42 terminée par un embout 43.

Comme on le voit, la tige 42 est constituée de deux portées cylindriques 421 et 422 successives et de diamètres différents. Sur la portée cylindrique 421 du plus grand diamètre est ménagé un méplat 423 qui est délimité par des arêtes de raccordement 424 parallèles aux génératrices du cylindre ; on forme ainsi des coins saillants.

L'embout 43 est destiné à recevoir des moyens de retenue 50 qui assurent l'assemblage de l'ensemble et le maintien du support de sangle qui peut toutefois, de préférence, basculer suivant l'axe du tourillon pour modifier sa position angulaire afin que la sangle puisse prendre son orientation la plus confortable.

On notera que sur la Fig.1, le tourillon a été tourné d'un quart de tour par rapport à sa position d'assemblage pour pouvoir mieux le dessiner. Normalement l'orientation du tourillon 40 est telle que son méplat 423 est en regard du flanc 312 de la fente 31 ou sont pratiquées les découpes 32.

Compte-tenu de sa forme, le tourillon peut être monté dans la fente, lorsqu'il est orienté convenablement, à n'importe quel endroit de celle-ci muni d'une découpe. En conséquence, il n'est pas indispensable de prévoir d'un évidement spécial à l'extrémité supérieure de la fente.

Comme illustré, ces moyens de retenue 50 sont par exemple un filetage 51 fait sur l'embout 43 sur lequel est vissé un écrou 52 après interposition d'une rondelle 53 par exemple élastique du type Grover ou "Onduflex".

Il est clair que ces moyens de retenue peuvent aussi être obtenus tout simplement par matage de l'embout 43 pour lui donner la configuration d'une tête de rivet.

Pour des raisons qui apparaîtront par la suite, le tourillon 40 est aussi pourvu si nécessaire d'un cran 44 ou analogue.

L'organe de sollicitation élastique 60 est, par exemple, fait d'un ressort 61 en corde à piano conformé comme dessiné de manière à présenter deux bouts 62 sur lesquels on reviendra par la suite.

Comme on le voit aussi notamment sur la Fig.1, le mécanisme selon l'invention comprend un levier de manoeuvre 70 dont le voile 71 est muni d'une manette de préhension 72, d'une butée 73 en forme de bras et d'un palier 74. Comme on peut l'observer, le palier 74 se présente à la manière de deux couronnes 741 et 742 contigües et de diamètres différents qui sont délimitées par des épaulements 743 radiaux.

L'un des bouts 62 du ressort 61 est destiné à être engagé dans le cran 44, par exemple un trou diamétral comme illustré, du tourillon pour servir à son ancrage et l'autre bout est destiné à reposer contre l'appui et, plus particulièrement, contre le fond 332 de la réglette 330.

Toutefois, il y a lieu d'observer que la présence du cran 44 n'est pas absolument indispensable car, en effet, il suffit de disposer d'un méplat pour donner un appui au brin central du ressort.

Les diamètres propres de la portée cylindrique 421 la plus grande et de la couronne 741 du palier 74 la plus grande sont voisins et choisis de manière à ce que le levier 70 puisse basculer relativement au tourillon 40.

De même le diamètre de l'orifice 22 du support de sangle 20 et le diamètre de la portée cylindrique 422 la plus petite de la tige 42 du tourillon 40 sont choisis de manière à ce que le support de sangle 20 puisse basculer relativement au tourillon 40; la rondelle 53 prend appui sur l'épaulement formé par la portée 422. Cette rondelle 53 sert de frein pour l'écrou 52 ; on peut aussi avantageusement remplacer cet ensemble écrou - rondelle par un écrou freiné.

De même, la largeur de la fente 31 et la taille des triangles curvilignes 320 des découpes 32 sont choisies de manière que la portée cylindrique 421 de plus grand diamètre qui est munie du méplat 423 puisse s'y déplacer comme on l'expliquera par la suite. De même, la taille du talon 41 est telle que le tourillon 40 étant engagé dans la fente 31 et muni de tout ce qu'il porte notamment du support de sangle et des moyens de retenue, le tourillon puisse se déplacer dans la fente sans pour autant s'échapper de cette dernière.

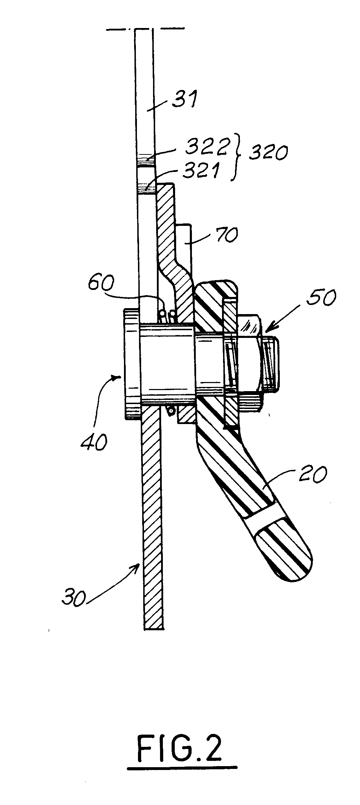

Tous les constituants du mécanisme que l'on vient de décrire, sont assemblés et montés de manière à occuper la configuration qui est schématisée sur la Fig.2.

Par exemple, le montage du tourillon dans la fente s'effectue en le passant derrière le corps 30. Ensuite après le montage du ressort, du levier, du support de sangle et des moyens de retenue, un ensemble complet est obtenu et celui-ci est rapporté finalement à la structure résistante 10.

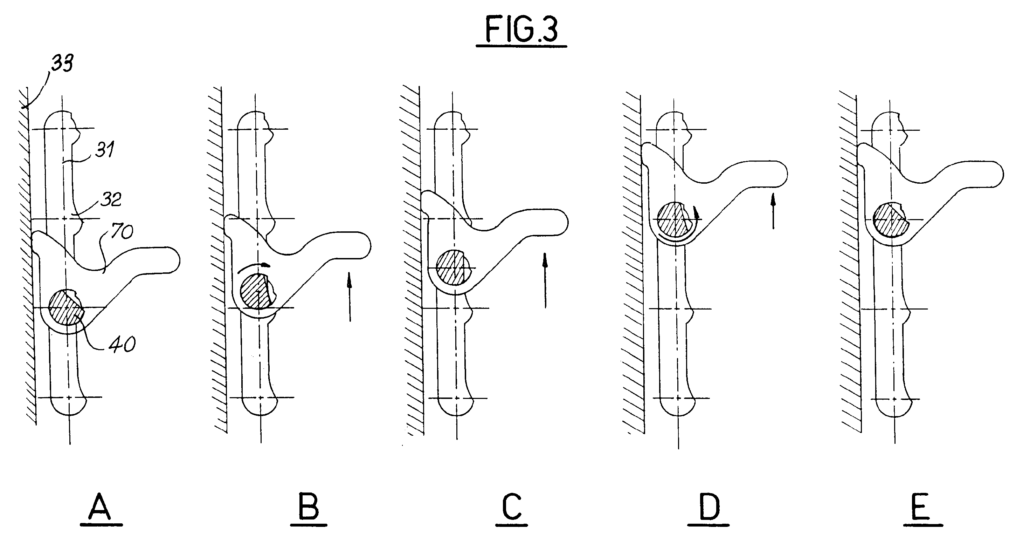

Le couple de rappel exercé par le ressort 61 est tel qu'il sollicite le tourillon 40 dans le sens opposé à celui des aiguilles d'une montre lorsqu'on regarde les Fig.3, 4 et 5.

On se reportera maintenant aux Fig.3, 4 et 5 pour expliquer le fonctionnement du mécanisme selon l'invention.

Initialement, on suppose que le mécanisme selon l'invention occupe la position ou il est illustré sur la vue 3A et que l'on veut le faire monter dans une découpe située au-dessus de celle dans laquelle il est engagé. Pour ce faire on pousse sur la manette de préhension 72 vers le haut comme illustré par la flèche rectiligne verticale ascendante sur la vue 3B. Par cette action le tourillon 40 est sollicité vers le haut et tend à tourner dans le sens des aiguilles d'une montre, comme illustré par une flèche curviligne dextrogyre sur la vue 3B, pour se libérer de la découpe 32 où il est engagé. Ceci résulte de la coopération du méplat 423 et de l'arc convexe 322 du triangle curviligne 320. En s'élévant, le tourillon bascule et son coin saillant se dégage progressivement du redan ; le méplat, d'incliné qu'il était se redresse et s'oriente parallèlement aux flancs 312 de la fente. Tout ce que porte le tourillon 40, qui joue alors un peu le rôle d'un curseur, peut être déplacé verticalement dans la fente 31 jusqu'à la hauteur désirée, ce déplacement vers le haut résultant de l'effort développé sur la manette de préhension 72 comme représenté sur la vue 3C. Aussitôt que la manette de préhension 72 est relâchée, le tourillon 40 ayant été placé au niveau d'une autre découpe 32, le tourillon 40 tourne dans le sens opposé sous l'action du couple développé par le ressort de rappel 61 comme illustré par une flèche curviligne lévogyre sur la vue 3D.

Le tourillon se trouve ensuite immobilisé dès qu il est totalement engagé dans une autre des découpes 32 comme représenté sur la vue 3E.

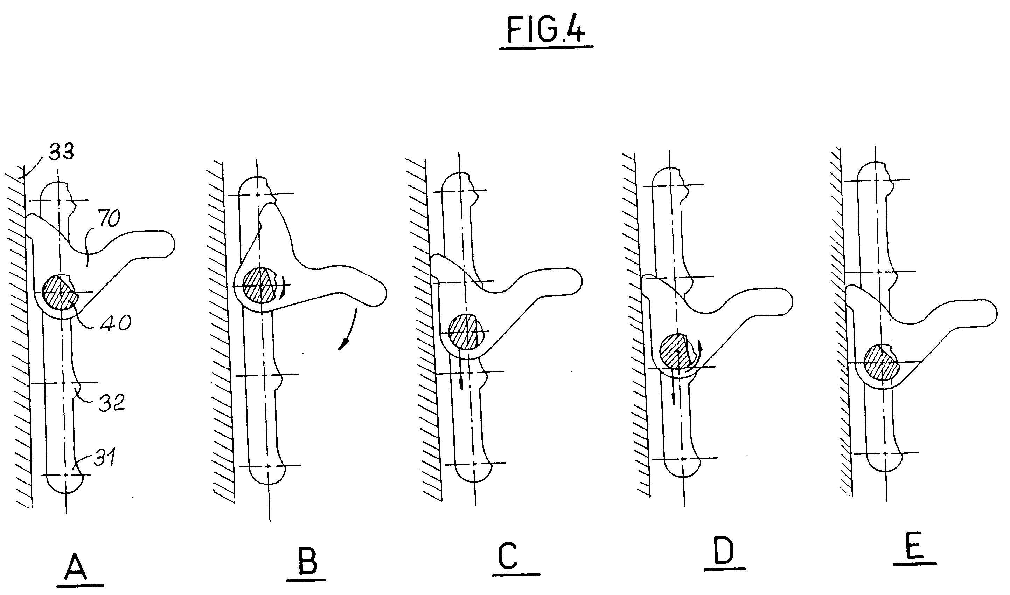

On se reportera maintenant à la Fig.4 qui illustre le cas ou le mécanisme étant dans la position de la vue 4A, on souhaite le déplacer pour le faire descendre dans une découpe située en-dessous. On presse alors sur la manette de préhension 72 comme illustré par la grande flèche curviligne dextrogyre sur la vue 4B. Ceci provoque un basculement du levier de manoeuvre 70 dans le même sens qui entraîne avec lui le tourillon 40. En effet celui des épaulements radiaux 743 qui est le plus bas sur cette vue rencontre le méplat 423 de la tige du tourillon. Ceci a pour résultat de déloger le coin saillant inférieur du redan où il était engagé. Aussitôt que le méplat 423 prend une position parallèle aux flancs rectilignes de la fente, tout ce que porte le tourillon peut rapidement coulisser vers le bas, par exemple sous l'action de la gravité et/ou de la tension de la sangle exercée par un enrouleur comme illustré par une flèche rectiligne verticale descendante sur la vue 4C ou 4D. Si on a relâché la manette, le couple exercé par le ressort sur le tourillon fait que celui-ci s'engage spontanément dans la première des découpes devant laquelle il passe comme illustré sur la vue 4D et y est immobilisé par la mise en prise de son coin saillant dans le redan de la découpe. Le mécanisme a repris sa position initiale dans la découpe suivante comme illustré sur la vue 4E.

On voit donc que pour passer d'une position à celle qui la suit immédiatement au-dessous, il suffit de donner une simple impulsion sur la manette de préhension en direction du bas: le tourillon se dégage de la découpe en tournant dans un sens et le ressort agit sur ce dernier, dans le sens opposé de manière que le levier soit rappelé dans ce sens jusqu'à la position extrême définie par le contact du bras de butée 73 avec le fond 332 de la réglette 330. Le méplat 423 de la tige vient alors s'immobiliser contre l'épaulement 743 du palier: le mécanisme est alors immobilisé à la hauteur souhaitée dans l'une des découpes.

Si l'on exerce un effort sur la manette 72 en direction du bas et si alors on le maintient, le tourillon et tout ce qu'il porte descend rapidement vers l'extrémité la plus basse de la fente.

Pour obtenir un déplacement pas à pas du support de sangle il suffit d'agir sur la manette par impulsions successives, comme cela ressort de ce qui précède.

On voit donc que le fonctionnement du mécanisme selon l'invention est particulièrement simple. En effet, une poussée vers le haut sur le levier permet de faire monter le support de sangle jusqu'à la hauteur désirée alors qu'une pression vers le bas sur le levier permet de faire descendre le support de sangle.

La manipulation du mécanisme selon l'invention se réduit donc à une action sur la manette du levier qui peut être faite très simplement d'une seule main voire d'un seul doigt.

En outre, on remarquera que le mécanisme suivant l'invention est particulièrement fiable.

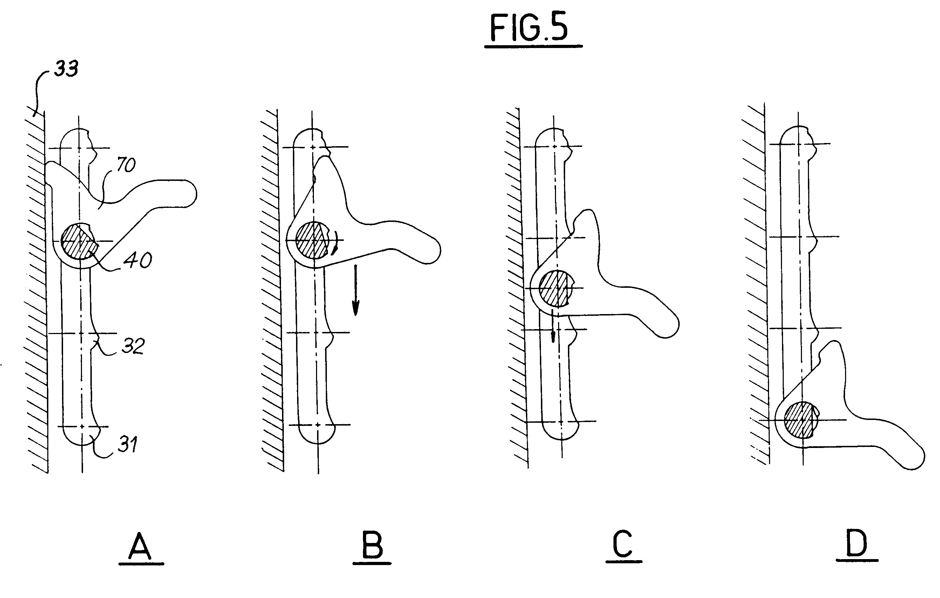

En effet en cas de rupture de l'organe de sollicitation élastique que constitue le ressort 61 la sécurité du passager n'est pas mise en cause. On le comprendra en regardant la Fig.5. Si le mécanisme occupe une position de réglage intermédiaire, par exemple celle de la vue 5A, cette position est conservée ; en effet sous le poids ou la tension de la sangle le coin saillant du tourillon reste bloqué dans le redan de la découpe. Si dans une telle situation on agit sur le levier de manoeuvre, vers le haut ou vers le bas, le tourillon est entraîné en rotation dans le sens de la flèche curviligne dextrogyre soit par l'arc convexe 322 soit par l'épaulement radial 743 respectivement, et le méplat prend une position parallèle aux flancs rectilignes de la fente et conserve cette orientation comme représenté sur la vue 5C. On voit alors que le tourillon et tout ce qu'il porte descend dans la fente jusqu'à la position de réglage extrême la plus basse dessinée sur la vue 5D. On comprend immédiatement qu'une telle position correspond à la sécurité maximale puisqu'un passager de petite taille voit alors la sangle descendre au niveau de l'une de ses épaules et non pas rester à l'aplomb de son cou.

Le corps 30 et le tourillon 40 du mécanisme selon l'invention sont, de préférence, métalliques et faits dans des matériaux de nuance appropriée qui sont conformés par exemple par des opérations de découpe, estampage et pliage ou de tournage, décolletage et fraisage, comme il est classique. Le tourillon peut aussi être obtenu par forgeage par frappe à froid. Quant au levier de manoeuvre 70 il peut être fabriqué de même ou obtenu par moulage d'une matière plastique appropriée.

Il est clair que le choix de ces matériaux n'est donné qu'à titre d'exemple et que tout ou partie de ces éléments peut être obtenue à l'aide de matières plastiques techniques qui présentent les propriétés mécaniques convenables en particulier de résistance au cisaillement et/ou à la flexion. Par exemple on peut améliorer la rigidité du corps notamment en munissant les flancs de la fente de lèvres ou ailes repliées à angle droit et les extrémités de la fente de formes en relief demi-circulaires ou tous autres bossages placés aux endroits appropriés.

Ce mode de réalisation s'il est simple et donne satisfaction peut présenter toutefois, dans certains cas, des troubles de fonctionnement. En effet, sa fente étant dégagée sur la plus grande partie de sa longueur, des éléments étrangers peuvent s'y introduire et gêner ou empêcher ensuite le déplacement du tourillon pour régler la position de la sangle. Outre un tel désagrément, il peut se faire que des enfants y introduisent par jeu des clés ou autres objets ce qui n'est pas sans créer de perturbations.

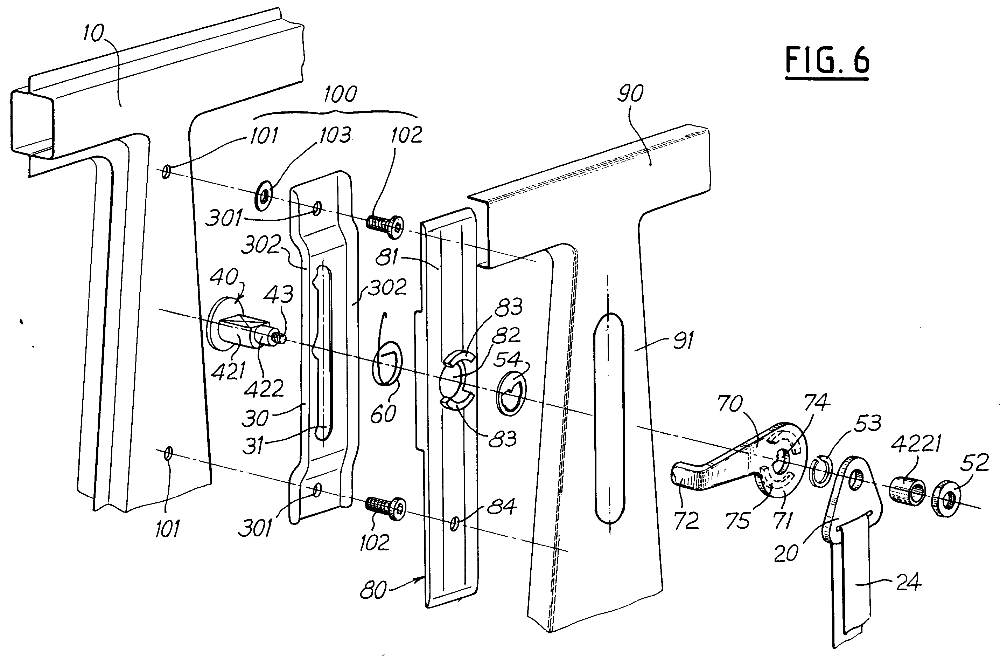

C'est pourquoi un autre mode de réalisation du mécanisme selon l'invention a été construit. Il est illustré sur les Fig.6 à 9.

Cet autre mode de réalisation est muni d'un protecteur 80 qui masque la fente 31 du corps 30 pour toutes les positions de réglage.

Comme déjà indiqué, les éléments homologues portent les mêmes numéros de référence que pour le premier mode de réalisation. C'est pourquoi on ne mentionnera que ce qui différencie les deux modes de réalisation illustrés.

La structure 10 est ici le montant ou "pied milieu" qui est présent sur le flanc d'une coque ou carrosserie de véhicule.

Le dispositif de fixation 100 est destiné à retenir le mécanisme selon l'invention sur la structure ; il comprend des trous 101, des vis 102 et au moins une rondelle 103, ultramince, comme illustré. La rondelle 103 permet de maintenir les pièces assemblées pour faciliter la pose et la fixation.

Le corps 30 se présente à la manière d'un U avec un pont médian qui relie les deux branches latérales contre-coudées, comme dessiné. Le pont est percé de la fente 31 et chacune des deux branches d'un trou 301 de fixation.

Chacun des grands côtés du corps 30 est bordé d'une nervure 302 latérale comme dessiné. Ces nervures ont un rôle double : elles confèrent de la rigidité et elles assurent un guidage pour les raisons exposées ultérieurement.

Le protecteur 80 se présente à la manière d'une plaque 81 longiligne dans l'axe de laquelle est ménagé un alésage 82 qui la transperce. Cet alésage 82 est muni d'un appui 83 dont le rôle sera exposé par la suite ; cet appui 83 est constitué de deux ailettes en arc de cercle qui bordent partiellement l'alésage 82 sur une partie de sa circonférence et qui font saillie sur l'une des faces de la plaque 81 ; ceci apparaît clairement notamment sur la Fig.6. La plaque est destinée à être placée contre le pont du corps et entre les nervures 302 de manière à pouvoir y coulisser l'alésage 82 est destiné à recevoir le tourillon 40 et, plus particulièrement, sa portée 421.

Pour les raisons qui apparaîtront ultérieurement, la plaque 81 est percée d'un trou 84 selon son axe longitudinal.

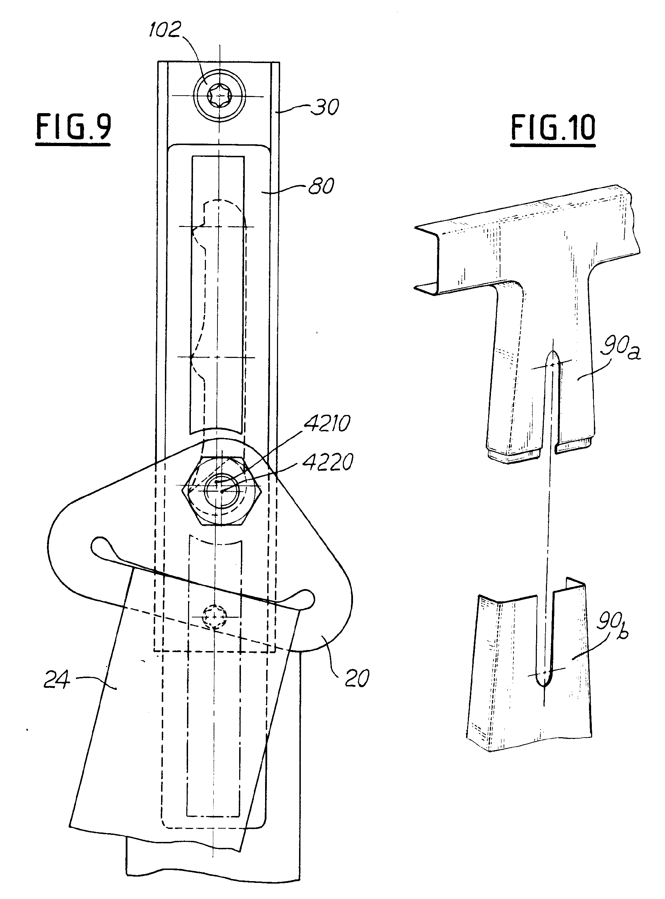

Les portées 421 et 422 cylindriques du tourillon 40 ne sont plus coaxiales mais excentrées ; ceci apparaît clairement sur la Fig.9 où on a dessiné l'axe 4210 de la portée 421 et l'axe 4220 de la portée 422. De plus, comme dessiné, la portée 422 est faite d'une douille 4221 rapportée, enfilée sur l'embout 43. Au besoin, cette douille est solidaire de l'écrou 52.

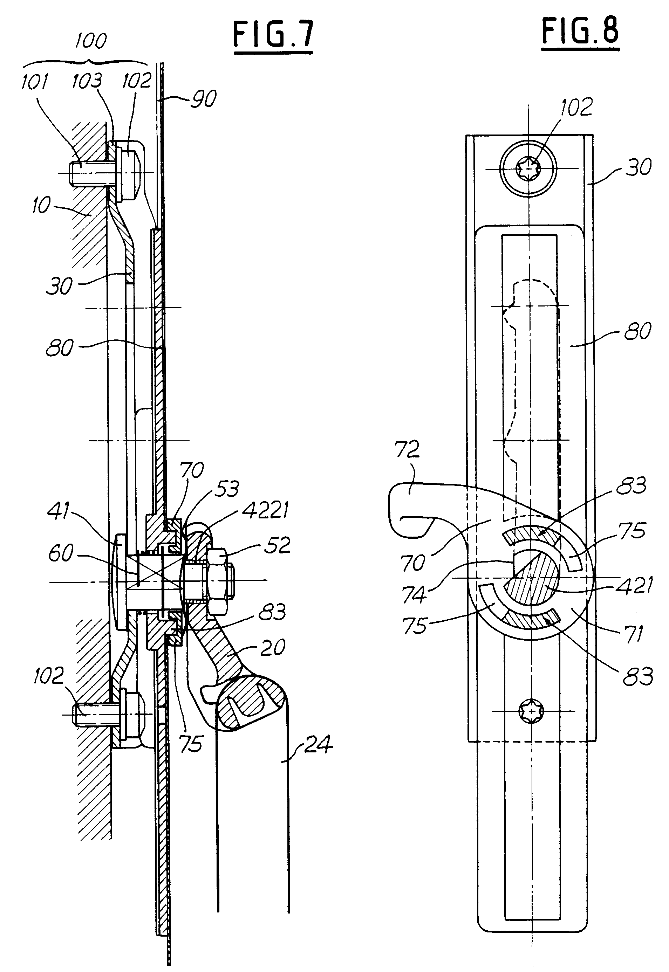

Le levier 70 porte une butée qui n'est plus faite d'un bras mais de gorges 75 en arc de cercle creusées sur l'une des faces du voile 71 ; ces gorges sont destinées à recevoir les ailettes 83 de l'appui ; ceci est clairement dessiné sur les Fig.7 et 8 notamment auxquelles il suffit de se reporter.

Ce mécanisme est recouvert d'un capot 90 d'un seul tenant ou en deux parties 90a, 90b comme illustré sur la Fig.6 ou sur la Fig.10 respectivement ; ce capot est transpercé d'une lumière 91 pour le libre passage du tourillon.

La longueur de la plaque 81 qui, quelle que soit la position du tourillon obture toujours la fente 31, est telle qu'au montage la vis 102 supérieure est démasquée alors que la vis 102 inférieure ne l'est pas; le trou 84 permet d'accéder à cette vis inférieure. Une rondelle 54, très fine, de forme adaptée sert uniquement à retenir le tourillon 40, l'organe de sollicitation élastique 60, le protecteur 80, et la vis 102 sur le corps 30 et forment avec ce dernier une entité prémontée.

Ce mécanisme est alors prêt à être réuni et posé sur la structure.

Le fonctionnement de ce mode de réalisation est le suivant ; on se reportera notamment à la Fig.8.

Par exemple on pousse vers le haut sur la manette de préhension 72 du levier 70. Les tranches radiales des ailettes 83 sont déjà en butée contre les extrémités radiales des gorges 75 du levier si bien que l'effort ascendant est transmis au tourillon 40 par l'intermédiaire du protecteur 80 qui agit sur la portée 421. Ce tourillon 40 bascule alors dans le sens anti-horaire sous l'effet de la réaction développée par l'un des côtés du triangle curviligne de la découpe où il est engagé puis coulisse vers le haut. Ceci permet d'éviter le risque d'arc-boutement.

Comme indiqué les portées cylindriques 421 et 422 de la tige 42 du tourillon 40 sont excentrées. En se reportant notamment à la Fig.9 on comprend donc que si l'on tire sur la sangle 24 on crée un couple qui tend à engager les arêtes 424 dans les redans de la fente 31 ; ceci améliore la sécurité de fonctionnement.

Le fait de construire le capot 90 en deux parties (Fig.10) permet d'assembler la totalité du mécanisme suivant l'invention avant son installation sur le véhicule sur une chaîne de montage.

Selon une variante d'exécution non illustrée la rondelle élastique 53 n'est pas intercalée entre levier et support de sangle comme dessiné, mais entre le talon du tourillon et le pont du corps. Cette rondelle a essentiellement pour but d'éviter la création de bruits liés au jeu de fonctionnement.

De préférence, le corps est obtenu par découpe et estampage d'une planche métallique et le protecteur par moulage d'une matière plastique. De même le capot peut être fait en métal ou en matière plastique. Selon un mode de réalisation, le corps est d'un seul tenant avec la structure.

On saisit donc, pour tout ce qui a été exposé, tous les avantages du mécanisme selon l'invention.

## Revendications

1. Mécanisme de maintien pour ceinture de sécurité à position manuellement modifiable du support de sangle constitué, entre autres, d'un corps (30) qui est destiné à être associé à une structure résistante et qui est transpercé d'une fente (31) dont l'un des flancs (312) est pourvu de découpes (32), d'un tourillon (40) qui est fait d'un talon (41), d'une tige (42) avec deux portées (421, 422) cylindriques successives de diamètres différents et d'un embout (43) ce dernier étant destiné à recevoir des moyens de retenue (50) d'un support de sangle (20) une fois engagé le tourillon (40) dans la fente (31), et d'un organe de sollicitation élastique (60) agissant sur le tourillon (40) en position d'immobilisation à l'intérieur d'une découpe (32), caractérisé en ce qu'au corps (30) est associé un appui (33; 83) à proximité de la fente (31), en ce que les découpes (32) ont une configuration en triangle curviligne (320), en ce que la portée (421) du plus grand diamètre est munie d'un méplat (423) délimité par des arêtes (424) de raccordement formant des coins saillants, en ce que l'organe de sollicitation élastique (60) exerce un couple sur le tourillon tendant à le faire basculer suivant son axe de manière à mettre en prise un coin saillant avec l'un des côtés curvilignes de la découpe (32) et en ce qu'il comprend un levier de manoeuvre (70) équipé d'un butée (73; 75) destinée à coopérer avec l'appui (33; 83) et d'un palier (74) destiné à recevoir la portée (421) du plus grand diamètre.

2. Mécanisme selon a revendication 1, caractérisé en ce que les découpes (32) en configuration de triangle curviligne (320) comprennent un arc concave (321) et un arc convexe (322) en direction de la fente (31).

3. Mécanisme selon la revendication 2, caractérisé en ce que l'arc concave (321) est situé au-dessous de l'arc convexe (322) en position normale de fonctionnement du mécanisme.

4. Mécanisme selon l'une quelconque des revendications 1 à 3, caractérisé en ce que le palier (74) comprend deux couronnes (741, 742) contigües et de diamètres différents délimitant entre elles des épaulements (743) radiaux.

5. Mécanisme selon l'une quelconque des revendications 1 à 4, caractérisé en ce que la plus grande (421) des portées et la plus grande (741) des couronnes ont des diamètres propres voisins qui leurs permettent de basculer relativement l'une à l'autre.

6. Mécanisme selon l'une quelconque des revendications 1 à 5, caractérisé en ce que l'appui (33) est une réglette (330) portée par le corps (30) et en ce que la butée (73) est un bras du levier (70).

7. Mécanisme selon l'une quelconque des revendications 1 à 6, caractérisé en ce que l'organe de sollicitation élastique (60) est un ressort (61).

8. Mécanisme selon la revendication 7, caractérisé en ce que le tourillon (40) est muni d'un cran (44) et en ce que l'un des bouts (62) du ressort (61) est engagé dans ce cran (44) et l'autre est appliqué contre l'appui (33).

9. Mécanisme selon l'une quelconque des revendications 6 à 8, caractérisé en ce que la réglette (330) comprend une semelle (331), un fond (332) et un rebord (333).

10. Mécanisme selon l'une quelconque des revendications 1 à 9, caractérisé en ce que l'appui (33) est rapporté sur le corps (30).

11. Mécanisme selon l'une quelconque des revendications 1 à 9, caractérisé en ce que l'appui (33) est d'un seul tenant avec le corps (30).

12. Mécanisme selon l'une quelconque des revendications 1 à 11, caractérisé en ce que le corps (30) est d'un seul tenant avec la structure (10).

13. Mécanisme selon l'une quelconque des revendications 1 à 11, caractérisé en ce que le corps (30) est rapporté sur la structure (10) où il est maintenu par un dispositif de fixation (100).

14. Mécanisme selon l'une quelconque des revendications 1 à 5 et 12, 13, caractérisé en ce que le corps (30) a une configuration en U dont le pont médian relie des branches latérales contre-coudées et porte des nervures (302) latérales et en ce qu'un protecteur (80) est placé sur ce corps entre les nervures pour y coulisser.

15. Mécanisme selon la revendication 14, caractérisé en ce que le protecteur (80) est formé d'une plaque (81) percée d'un alésage (82) bordé d'ailettes (83) en arc de cercle en saillie servant d'appui et en ce que le levier (70) présente un voile (71) creusé de gorges (75) en arc de cercle destinées à recevoir ces ailettes et servant de butée.

16. Mécanisme selon l'une quelconque des revendications 1 à 15, caractérisé en ce qu'il est revêtu d'un capot (90).

17. Mécanisme selon la revendication 16, caractérisé en ce que capot est en deux parties (90a, 90b).

## Patentansprüche

1. Mechanismus für die Befestigung eines Sicherheitsgurtes mit der Möglichkeit der manuellen Veränderung der Position der Gurthalterung, der, unter anderem, aus einem Körper (30) besteht, der dafür bestimmt ist, mit einer widerstandsfähigen Struktur verbunden zu werden und der mit einem Schlitz (31) versehen ist, dessen eine Flanke (312) mit Ausschnitten (32) versehen ist, sowie aus einem Lagerzapfen (40), der aus einem Steg (41), einem Schaft (42) mit zwei aufeinanderfolgenden zylindrischen Auflageflächen (421, 422) unterschiedlichen Durchmessers und einem Ansatz (43) besteht, wobei letzterer dafür bestimmt ist, Rückhaltemittel (50) für eine Gurthalterung (20) aufzunehmen, wenn der Lagerzapfen (40) in den Schlitz (31) eingreift, sowie aus einem elastischen Spannelement (60), das auf den innerhalb eines Ausschnittes (32) in Ruhestellung befindlichen Lagerzapfen (40) einwirkt,
**dadurch gekennzeichnet, daß**
dem Körper (30) ein Auflager (33; 83) an dem Schlitz (31) zugeordnet ist und daß die Ausschnitte (32) die Konfiguration eines gekrümmten Dreiecks (320) haben, und daß die Auflagefläche (421) mit dem größeren Durchmesser mit einer Abflachung (423) versehen ist, die durch vorspringende Keile bildende Anschlußkanten (424) begrenzt wird, und dadurch daß das elastische Spannelement (60) auf den Lagerzapfen ein Moment ausübt, um ihn entlang seiner Achse zu kippen und dadurch einen der vorspringenden Keile mit einer der gekrümmten Seiten des Ausschnittes (32) in Eingriff zu bringen, und dadurch, daß er einen Betätigungshebel (70) aufweist, der mit einem Widerlager (73; 75) versehen ist, das mit der Auflage (33; 83) zusammenwirkt, sowie mit einem Lager (74), das die Auflagefläche (421) mit dem größten Durchmesser aufnimmt.

2. Mechanismus nach Anspruch 1,
**dadurch gekennzeichnet, daß**
die Ausschnitte (32) mit der Konfiguration eines gekrümmten Dreiecks (320) einen konkaven bogen (321) und einen konvexen Bogen (322) in Richtung des Schlitzes (31) aufweisen.

3. Mechanismus nach Anspruch 2,
**dadurch gekennzeichnet, daß**
der konkave Bogen (321) in normaler Funktionsstellung des Mechanismus unterhalb des konvexen Bogens (322) angeordnet ist.

4. Mechanismus nach einem der Ansprüche 1 bis 3,
**dadurch gekennzeichnet, daß**
das Lager (74) zwei aneinanderstoßende Einfassungen (741, 742) mit unterschiedlichem Durchmesser aufweist, die untereinander radiale schultern (743) bilden.

5. Mechanismus nach einem der Ansprüche 1 bis 4,
**dadurch gekennzeichnet, daß**
die größte Auflagefläche (421) und die größte Einfassung (741) benachbarte Durchmesser haben, die es ihnen erlauben, relativ zueinander gekippt zu werden.

6. Mechanismus nach einem der Ansprüche 1 bis 5,
**dadurch gekennzeichnet, daß**
das Auflager (33) eine Leiste (330) ist, die von dem Körper (30) getragen wird, und daß das Widerlager (73) ein Arm des Hebels (70) ist.

7. Mechanismus nach einem der Ansprüche 1 bis 6,
**dadurch gekennzeichnet, daß**
das elastische Spannelement (60) eine Feder (61) ist.

8. Mechanismus nach Anspruch 7,
**dadurch gekennzeichnet, daß**
der Lagerzapfen (40) mit einer Rastkerbe (44) versehen ist und daß das eine Ende (62) der Feder (61) in die Rastkerbe (44) eingreift und das andere Ende an dem Auflager (33) anliegt.

9. Mechanismus nach einem der Ansprüche 6 bis 8,
**dadurch gekennzeichnet, daß**
die Leiste (330) einen Steg (331), einen Bodenteil (332) und eine Kante (333) aufweist.

10. Mechanismus nach einem der Ansprüche 1 bis 9,
**dadurch gekennzeichnet, daß**
das Auflager (33) an dem Körper (30) befestigt ist.

11. Mechanismus nach einem der Ansprüche 1 bis 9,
**dadurch gekennzeichnet, daß**
das Auflager (33) einstückig mit dem Körper (30) ausgebildet ist.

12. Mechanismus nach einem der Ansprüche 1 bis 11,
**dadurch gekennzeichnet, daß**
der Körper (30) einstückig mit der Struktur (10) ausgebildet ist.

13. Mechanismus nach einem der Ansprüche 1 bis 11,
**dadurch gekennzeichnet, daß**
der Körper (30) an der Struktur (10) angesetzt ist, an der er mittels einer Befestigungsvorrichtung (100) gehalten wird.

14. Mechanismus nach einem der Ansprüche 1 bis 5 und 12, 13,
**dadurch gekennzeichnet, daß**
der Körper (30) eine U-förmige Konfiguration hat, deren Mittelsteg durch seitliche gekröpfte Schenkel verbunden ist und seitliche Rippen (302) trägt, und daß eine Schutzvorrichtung (80) an diesem Körper gleitend zwischen den Rippen vorgesehen ist.

15. Mechanismus nach Anspruch 14,
**dadurch gekennzeichnet, daß**
die Schutzvorrichtung (80) aus einer mit einer Gewindebohrung (82) versehenen Platte (81) besteht, die vorspringende bogenförmige Flügel (83) aufweist, die als Auflager dienen, und dadurch, daß der Hebel (70) eine Verwindung (71) aufweist, die mit kreisförmigen Nuten (75) versehen ist, die diese Flügel aufnehmen und als Widerlager dienen.

16. Mechanismus nach einem der Ansprüche 1 bis 15,
**dadurch gekennzeichnet, daß**
er mit einer Abdeckhaube (90) versehen ist.

17. Mechanismus nach Anspruch 16,
**dadurch gekennzeichnet, daß**
die Abdeckhaube aus zwei Teilen (90a, 90b) besteht.

## Claims

1. Holding mechanism for safety belt with manually adjustable position of the strap holder, consisting, amongst other things, of a body (30) which is intended to be associated with a strong structure and which is pierced through by a slot (31) one of whose lateral faces (312) is provided with cutouts (32), of a bearing pin (40) which is made from a heel (41), from a rod (42) with two successive cylindrical bearing surfaces (421, 422) with different diameters and from a joining piece (43), the latter being intended to receive retention means (50) of a strap holder (20) once the bearing pin (40) is engaged in the slot (31), and of an elastic stressing member (60) acting on the bearing pin (40) in an immobilisation position inside one cutout (32), characterised in that there is associated with the body (30) a support (33; 83) in proximity to the slot (31), in that the cutouts (32) have a curvilinear triangular configuration (320), in that the bearing surface (421) with the larger diameter is provided with a flat (423) delimited by connection edges (424) forming projecting wedges, in that the elastic stressing member (60) exerts a moment on the bearing pin tending to tilt it around its axis so as to make a projecting wedge engage with one of the curvilinear sides of the cutout (32), and in that it comprises an operating lever (70) fitted with a stop (73; 75) intended to interact with the support (33; 83) and with a bearing (74) intended to receive the bearing surface (421) with the larger diameter.

2. Mechanism according to Claim 1, characterised in that the cutouts (32) in curvilinear triangular configuration (320) comprise an arc which is concave (321) and an arc which is convex (322) in the direction of the slot (31).

3. Mechanism according to Claim 2, characterised in that the concave arc (321) is situated beneath the convex arc (322) in the normal operating position of the mechanism.

4. Mechanism according to any one of Claims 1 to 3, characterised in that the bearing (74) comprises two contiguous ring portions (741, 742) with different diameters delimiting between them radial shoulders (743).

5. Mechanism according to any one of Claims 1 to 4, characterised in that the larger (421) of the bearing surfaces and the larger (741) of the ring portions have similar individual diameters which allow them to tilt relatively to each other.

6. Mechanism according to any one of Claims 1 to 5, characterised in that the support (33) is a strip (330) carried by the body (30) and in that the stop (73) is an arm of the lever (70).

7. Mechanism according to any one of Claims 1 to 6, characterised in that the elastic stressing member (60) is a spring (61).

8. Mechanism according to Claim 7, characterised in that the bearing pin (40) is provided with a notch (44) and in that one of the ends (62) of the spring (61) is engaged in this notch (44) and the other is applied against the support (33).

9. Mechanism according to any one of Claims 6 to 8, characterised in that the strip (330) comprises a base (331), a back (332) and a rim (333).

10. Mechanism according to any one of Claims 1 to 9, characterised in that the support (33) is mounted on the body (30).

11. Mechanism according to any one of Claims 1 to 9, characterised in that the support (33) forms a single piece with the body (30).

12. Mechanism according to any one of Claims 1 to 11, characterised in that the body (30) forms a single piece with the structure (10).

13. Mechanism according to any one of Claims 1 to 11, characterised in that the body (30) is mounted on the structure (10) where it is held by a fastening device (100).

14. Mechanism according to any one of Claims 1 to 5 and 12, 13, characterised in that the body (30) has a U-shaped configuration whose middle bridge joins reverse-bend lateral branches and carries lateral ribs (302) and in that a guard (80) is placed on this body between the ribs in order to slide therein.

15. Mechanism according to Claim 14, characterised in that the guard (80) is formed from a plate (81) pierced by a bore (82) edged by projecting circular arc fins (83) being used as a support and in that the lever (70) has a web (71) hollowed with circular arc grooves (75) intended to receive these fins and being used as a stop.

16. Mechanism according to any one of Claims 1 to 15, characterised in that it is overlaid with a cover (90).

17. Mechanism according to Claim 16, characterised in that the cover is in two parts (90a, 90b).
